# EUROPÄISCHE PATENTSCHRIFT

(11) **EP 1 305 266 B1**
(45) Veröffentlichungstag und Bekanntmachung des Hinweises auf die Patenterteilung: **20.10.2004**
(21) Anmeldenummer: 01947322.2
(22) Anmeldetag: 26.05.2001
(51) Int. Cl.: C04B 35/66, C04B 41/50

(54) **VERWENDUNG EINES GEBRANNTEN FEUERFESTEN KERAMISCHEN FORMTEILS**
USE OF A FIRED REFRACTORY CERAMIC SHAPED PART
UTILISATION D'UN CORPS MOULE CERAMIQUE CUIT REFRACTAIRE

(30) Priorität: 22.07.2000 DE 10035728
(43) Veröffentlichungstag der Anmeldung: 02.05.2003
(73) Patentinhaber: Refractory Intellectual Property GmbH & Co. KG, 1100 Wien (AT)
(72) Erfinder: GEITH, Martin, A-8720 Knittelfeld (AT); TRUMMER, Bernd, A-8010 Graz (AT); BUCHBERGER, Bernd, A-8793 Trofaiach (AT)
(74) Vertreter: Becker, Thomas U., Dr.
(86) Internationale Anmeldenummer: PCT/EP2001/006024
(87) Internationale Veröffentlichungsnummer: WO 2002/008149

(56) Entgegenhaltungen:
- EP-A- 0 742 187
- EP-A- 0 816 305
- DE-A- 19 919 401

## Beschreibung

Die Erfindung betrifft die Verwendung eines gebrannten feuerfesten keramischen Formteils.

Die Verwendung ungebrannter und gebrannter feuerfester keramischer Formteile als Auskleidungsmaterial von Öfen, insbesondere Industrieöfen, ist seit langem bekannt. Die Auswahl des Feuerfestmaterials hat sich an dem jeweiligen Ofenaggregat und den dort vorhandenen Bedingungen zu orientieren. Dabei können beispielsweise Öfen für metallurgische Anwendungen von reinen Sinter- oder Verbrennungsöfen unterschieden werden.

Auch wenn für alle Ofenarten gilt, daß das Feuerfestmaterial eine möglichst hohe Beständigkeit (Lebensdauer) aufweisen soll so ergeben sich im weiteren grundsätzliche Unterschiede:
Feuerfeste Formteile zur Auskleidung metallurgischer Schmelzöfen müssen insbesondere gegenüber den metallurgischen Schmelzen und/oder einer zugehörigen Schlacke beständig sein. Sie müssen je nach Anwendung auch eine gute Temperaturwechselsbeständigkeit besitzen.

Bei Sinteröfen, beispielsweise Zement-Drehrohröfen, wird primär eine Infiltrationsbeständigkeit gegenüber den zum Teil aggressiven Ofengasen gefordert.

Die Erfindung richtet sich auf Feuerfestmaterial zur Auskleidung der letztgenannten Öfen (incl. vor- und nachgeschalteter Aggregate) und soll im weiteren beispielhaft anhand einer Zement-Drehrohrofen-Anlage beschrieben werden.

Bei der Verwendung von alternativen Brennstoffen kann es zu einer erhöhten Belastung der feuerfesten Auskleidung mit Fremdstoffen, insbesondere Alkalien, insbesondere in der Form von Alkalisulfaten, Alkalikarbonaten oder Alkalichloriden über die Gasatmosphäre kommen.

Dabei ist zwischen einem physikalischen und chemischen Angriff zu unterscheiden. Der physikalische Angriff erfolgt durch Salzabscheidungen aus der Gasphase. Dadurch wird die Gefügeflexibilität verringert. Beim chemischen Angriff kommt es zu einer Reaktion des Feuerfestmaterials mit den Alkalisalzen. Eindringende Alkalisalze reagieren zuerst mit der Glasphase, bis diese mit Alkalien gesättigt ist. Danach kommt es zur Reaktion mit Cristobalit (ab circa 600°C). Ab circa 930°C kristallisieren je nach Temperatur, Alkalienangebot und Zeit die Phasen Leucit, Kaliophilit und Nephelin aus. Diese Phasenbildung hat eine erhebliche Volumenzunahme zur Folge. Bei Tonerdeprodukten kommt es zwischen 1.000°C und 1.050°C im Zement-Drehrohrofen zur Bildung von Beta-Korund beziehungsweise Kaliumaluminat. Auch diese Phasenneubildung ist mit einer starken Volumenzunahme verbunden.

Steine auf Basis Schamotte/Andalusit (mit einem SiO₂-Gehalt von circa 32 bis 40 Gew.-% und einem Al₂O₃-Gehalt von circa 55 bis 63 Gew.-%) können bis circa 1.550°C eingesetzt werden. Diese Steine weisen jedoch eine relativ schlechte chemische Beständigkeit, insbesondere gegenüber Alkalien, auf. Einer erhöhten Alkalibelastung kann durch den Einsatz von Steinen mit erhöhtem SiO₂-Gehalt Rechnung getragen werden, beispielsweise durch die Verwendung mehr oder weniger reiner Schamottesteine (mit einem SiO₂-Gehalt von über 50 Gew.-%).

Die Feuerfestigkeit dieser Steine liegt jedoch nur noch bei circa 1.400°C.

Aufgabe der Erfindung ist es, einen Werkstoff beziehungsweise ein feuerfestes keramisches Formteil zur Verfügung zu stellen, das eine hohe Feuerfestigkeit (Anwendungsgrenztemperatur) mit den Eigenschaften hoher Infiltrationsbeständigkeit, insbesondere gegenüber einem Alkaliangriff, verbindet.

Der Lösung dieser Aufgabe liegt folgende Überlegung zugrunde:
Das Feuerfestmaterial des Formteils soll gegenüber einem Alkaliangriff geschützt werden, ohne es in seiner chemisch/mineralogischen Zusammensetzung nennenswert verändern zu müssen. Dabei geht der Erfindungsgedanke dahin, dem Feuerfestmaterial des Formteils eine "Reaktionsbarriere" vorzuschalten, wobei diese beispielsweise aus mindestens einem Sol bestehen kann. Um das Formteil (den Stein) über sein gesamtes Volumen zu schützen ist weiter vorgesehen, diese "Reaktionsbarriere" entlang des nach dem Brand offenen Porenraums des Formteils zur Verfügung zu stellen.

Wird das nach dem Brand offene Porenvolumen des Formteils insbesondere mit mindestens einem Sol, gegebenenfalls in Kombination mit einer Suspension beziehungsweise einer chemischen Lösung oder Salzschmelze zumindest teilweise verfüllt reagieren die eindringenden Fremdstoffe (Alkalisalze) zunächst mit dem in den Poren befindlichen Material. Dabei treten zwar im wesentlichen die gleichen chemischen Reaktionen (mit der gleichen Volumenexpansion) wie bei einem unbehandelten Formteil auf. Es kommt jedoch nicht mehr zu einer Zerstörung des feuerfesten Grundmaterials, da dessen Bestandteile (insbesondere SiO₂ und oder Al₂O₃) nicht an den chemischen Reaktionen beteiligt sind. Vielmehr verlaufen die genannten Reaktionen (mehr oder weniger ausschließlich) ungehindert im freien Porenraum mit dem in den Poren befindlichen Material ab. Entsprechend dieser "vorgelagerten Reaktionsbarriere" bleibt das Feuerfestmaterial des Formteils weitestgehend unbelastet.

Im Ergebnis können nun wieder Sorten mit zum Beispiel geringerem SiO₂-Gehalt, aber höherer Feuerfestigkeit eingesetzt werden.

Die Erfindung betrifft danach in ihrer allgemeinsten Ausführungsform die Verwendung eines gebrannten feuerfesten keramischen Formteils, dessen nach dem Brand offener Porenraum zumindest teilweise mit mindestens einem flüssigen Material gefüllt wurde, als Auskleidungsmaterial in Öfen, in denen das Formteil einem Angriff durch Alkalien ausgesetzt ist, wobei das Material so ausgewählt wird, daß es unter Temperatureinwirkung (bei der Herstellung oder beim Einsatz des Formteils) zur Abscheidung mindestens eines feuerfesten Oxides im Porenraum führt.

In der DE 197 35 495 A1 wird zwar ein feuerfestes keramisches Formteil mit einer, das offene Porenvolumen zumindest teilweise ausfüllenden Imprägnierung beschrieben, wobei die Imprägnierung Kieselsäure haltig ist. Die Imprägnierung besteht jedoch zum einen aus der Kombination eines Kieselsols spezifischer Viskosität und eines die Gelierung des Kieselsols unterdrückenden Zusatzmittels und sie ist zum anderen auf feuerfeste keramische Formteile beschränkt, die gegenüber metallurgischen Schmelzen und Schlacken beständig sind. Die Wirkung der bekannten Lösung beruht darauf, daß eine möglichst hohe Feststoffkonzentration und Verfüllung des offenen Porenvolumens des Formteils erreicht wird, um entsprechend die Gasdurchlässigkeit herabzusetzen.

Demgegenüber ist es nach der Erfindung Sinn und Zweck der Verfüllung des Porenvolumens mit mindestens einem Stoff der vorstehend und nachstehend genannten Art, die Füllstoffe gezielt einem Alkaliangriff auszusetzen, um das eigentliche Feuerfestmaterial des Formteils vor einem Alkaliangriff zu schützen.

Die Erfindung wird nachstehend am Beispiel eines Kieselsols beschrieben, umfaßt aber auch andere Sole, einzeln oder in Kombinationen, die die genannte Oxidabscheidung ermöglichen. Ebenso können als Poren-Füllmaterial mindestens eine Suspension (mit gröberen Teilchen gegenüber einem Sol), eine chemischen Lösung oder eine Salzschmelze gewählt werden, und zwar einzeln oder in Kombination, auch in Kombination mit einem Sol. Für diese gelten die mit Bezug auf eine feindisperse amorphe Kieselsäure nachstehend gegebenen Informationen im wesentlichen analog.

Die Verfüllung des offenen Porenvolumens mit einer feindispersen amorphen Kieselsäure erfolgt vorzugsweise durch Tränkung des gebrannten Formteils in einem reinen Kieselsol-Bad.

Der Grad der Verfüllung und die Verteilung der Kieselsäure im offenen Porenvolumen kann durch Verwendung feindisperser amorpher Kieselsäure mit einer mittleren Teilchengröße (Teilchendurchmesser d₅₀) < 250 nm, nach einer Ausführungsform < 50 nm (auch < 30 nm) optimiert werden.

Dabei genügt in der Regel ein Verfüllungsgrad des offenen Porenvolumens von etwa 50 %, wenngleich auch über 80 Vol.-% des offenen Porenvolumens mit dem Stoff ausgefüllt werden können, je nachdem, in welchem Umfang (Ausmaß) mit einem chemischen Angriff bei der Anwendung zu rechnen ist.

Aufgrund der geringen Porengröße (mittlerer Durchmesser üblicherweise zwischen 1 und 20 µm) wird beispielsweise nur relativ wenig zusätzliche Kieselsäure in das Formteil eingebracht. Der Gesamt-SiO₂-Gehalt liegt entsprechend nur wenig über dem SiO₂-Gehalt des unbehandelten Formteils. Je nach Porosität und Anwendungsfall kann sich der Gesamt-Oxid-Gehalt, beispielsweise der SiO₂-Gehalt um absolut 1 bis 7 Masse-% erhöhen; üblicherweise liegt die Erhöhung lediglich bei 3 bis 5 Masse-%.

Bei der Verwendung des Formteils als Auskleidungsmaterial in einem Ofen, in dem das Formteil einer Alkalien enthaltenden Gasatmosphäre ausgesetzt ist, also beispielsweise in einer Zement-Drehrohrofen-Anlage (unter anderem im Bereich der Vorcalcinierung oder eines (Rost)Kühlers), wird durch die Behandlung eine Alkalibeständigkeit erreicht, wie sie sonst nur mit sehr hohen SiO₂-Gehalten des Feuerfestmaterials erreichbar ist.

Ausgehend von den eingangs genannten Werkstoffen auf Basis Schamotte/Andalusit einerseits beziehungsweise Schamotte andererseits kann erfindungsgemäß ein Formteil auf Basis Schamotte/Andalusit mit beispielsweise lediglich 36 Masse-% SiO₂ eingesetzt werden, welches neben der genannten hohen Anwendungstemperatur bis zu 1.550°C nunmehr eine Infiltrationsbeständigkeit gegenüber einer Alkalisalze führenden Gasphase besitzt, die der reiner Schamottesteine (mit einem SiO₂-Gehalt von beispielsweise 52 Masse-%) entspricht.

Insoweit können die verwendeten Formteile nach einer Ausführungsform einen SiO₂-Gehalt aufweisen, der ohne den SiO₂-Anteil des im Porenvolumen verteilten Materials < 60 Masse-% beträgt.

Um den Einfluß der Alkali-Infiltration quantifizieren zu können wurde ein Tiegelinfiltrationsversuch mit Kaliumkarbonat/Kaliumsulfat durchgeführt. Dazu wurden aus gebrannten Steinen auf Basis Schamotte/Andalusit (mit 59 Masse-% Al₂O₃ und 36 Masse-% SiO₂) Würfel mit den Abmessungen 80 x 80 x 80 mm geschnitten und mit einer Sackbohrung mit einem Durchmesser von 40 mm versehen.

Ein erster so hergestellter Tiegel (U) wurde ohne weitere Behandlung eingesetzt, ein zweiter Tiegel (B) wurde in einem Kieselsol-Bad bis zu einem Massezuwachs durch die in das offene Porenvolumen eindringende Kieselsäure von etwa 5 Masse-% getränkt. Beide Tiegel wurden folgendem 7-stufigen Infiltrationsversuch unterworfen:
1.
   Die Tiegel wurden mit 20 g eines Gemisches aus K₂CO₃ und K₂SO₄ (50:50) gefüllt. Anschließend erfolgte eine Glühung bei 1.050°C über 4 Stunden.
2.
   Danach erfolgte eine weitere Glühung über 4 Stunden bei 1.050°C.
3.
   Die Tiegel wurden ausgebohrt, um den Alkalien eine neue Angriffsfläche zu geben. Nach dem Ausbohren wurden die Tiegel bei 150°C 8 Stunden lang getrocknet.
   Anschließend wurden die Tiegel analog 1. neu befüllt und wiederum 4 Stunden bei 1.050°C geglüht.
4.
   Stufe 2 wurde wiederholt.
5.
   Stufe 3 wurde mit der Maßgabe wiederholt, daß die Tiegel mit einem Gemisch aus K₂CO₃/K₂SO₄ im Verhältnis 75:25 befüllt wurden.
6.
   Stufe 2 wurde wiederholt.
7.
   Die Tiegel wurden ausgebohrt, um den Alkalien eine neue Angriffsfläche zu geben. Nach dem Ausbohren wurden die Tiegel bei 150°C 8 Stunden lang getrocknet. Anschließend wurden die Tiegel mit 20g reinem K₂CO₃ befüllt und abschließend 4 Stunden lang bei 1.050°C geglüht.

Während der unbehandelte Tiegel (U) bereits nach Stufe 1 in erheblichem Umfang Risse aufwies, und zwar in einer Ebene senkrecht zur Mittenlängsachse der Bohrung, konnte eine entsprechende Rißausbildung bei dem behandelten Tiegel (B) erst nach Stufe 7 beobachtet werden.

Je nach Werkstoff des feuerfesten Formteils können anstelle oder gemeinsam mit einem Kieselsol auch Aluminasole verwendet werden. Ihr Feststoffgehalt beträgt üblicherweise < 30 Gew.-%.

Zielphase, die im Porenraum ausgebildet wird, ist beispielsweise Nephelin (NAS₂) oder Orthoklas (KAS₆) mit einem Stoffmengenverhältnis Al₂O₃ : SiO₂ (nach thermischer Umsetzung zu Oxiden) zwischen beispielsweise 1:2 (mol) und 1:6 (mol). Dies entspricht einem Masseverhältnis Al₂O₃ : SiO₂ zwischen 1:1,18 und 1:3,54 bei thermisch vollständig zu Oxiden umgesetzten Stoffen.

Bei einer Imprägnierung mit einem Kieselsol (mit 45 Gew.-% Feststoffgehalt) und einem Al-Sol (mit 10 Gew.-% Feststoffgehalt) ergibt sich entsprechend ein Mischungsverhältnis Al-Sol : Kieselsol von 1,27:1 bis 3,82:1.

Mischungen aus einem Kieselsol und einer Al-Nitrat-9 Hydrat-Schmelze führen gemäß obigen Stoffmengen und Massenverhältnissen zu einem Mischungsverhältnis der Schmelze zum Kieselsol zwischen 1:1,07 und 2,81:1.

Schließlich seien Sole beziehungsweise gleichwirkende Suspensionen als Füllmaterial erwähnt, die nach thermischer Umsetzung ein Al₂O₃/SiO₂-Gemisch ergeben.

## Patentansprüche

1. Verwendung eines gebrannten feuerfesten keramischen Formteils, dessen nach dem Brand offener Porenraum zumindest teilweise mit mindestens einem flüssigen Material gefüllt wurde, das unter Temperatureinwirkung zur Abscheidung mindestens eines feuerfesten Oxides im Porenraum führt, als Auskleidungsmaterial in Öfen, in denen das Formteil einem Angriff durch Alkalien ausgesetzt ist.

2. Verwendung eines Formteils nach Anspruch 1, bei der als flüssiges Material ein Sol eingesetzt wird.

3. Verwendung eines Formteils nach Anspruch 2 mit der Maßgabe, daß das Sol eine mittlere Teilchengröße (d₅₀) < 250 nm aufweist.

4. Verwendung eines Formteils nach Anspruch 2 mit der Maßgabe, daß das Sol eine mittlere Teilchengröße (d₅₀) < 50 nm aufweist.

5. Verwendung eines Formteils nach Anspruch 2 mit der Maßgabe, daß das mindestens eine Sol ein Kieselsol, ein Aluminasol oder eine Mischung aus einem Kieselsol und einem Aluminasol ist.

6. Verwendung eines Formteils nach Anspruch 2 mit der Maßgabe, daß das mindestens eine Sol in Kombination mit einer gleichwirkenden Suspension und/oder einer Salzschmelze den offenen Porenraum zumindest teilweise ausfüllt.

7. Verwendung eines Formteils nach Anspruch 1 mit der Maßgabe, daß der nach dem Brand offene Porenraum des Formteils zu mindestens 50 Vol.-% mit dem flüssigen Material gefüllt ist.

8. Verwendung eines Formteils nach Anspruch 1 mit der Maßgabe, daß der nach dem Brand offene Porenraum des Formteils zu mindestens 80 Vol.-% mit dem flüssigen Material gefüllt ist.

9. Verwendung eines Formteils nach Anspruch 1, dessen Gehalt an feuerfesten Oxiden durch das nach dem Brand des Formteils in den offenen Porenraum eingebrachte Material um absolut 1 bis 7 Masse-% erhöht ist.

10. Verwendung eines Formteils nach Anspruch 1 als Auskleidungsmaterial in Öfen, in denen das Formteil einer Alkalien enthaltenden Gasatmosphäre ausgesetzt ist.

11. Verwendung eines Formteils nach Anspruch 1 als Auskleidungsmaterial in einer Zement-Drehrohrofen-Anlage.

12. Verwendung eines Formteils nach Anspruch 1, dessen SiO₂-Gehalt, ohne einen SiO₂-Anteil des im Porenraum verteilten Materials < 60 Masse-% beträgt.

## Claims

1. A use of a fired refractory molded ceramic part whose open pore volume after firing has been filled at least partially with at least one liquid material which leads to deposition of at least one refractory oxide in the pore volume under the influence of temperature, as a lining material in furnaces in which the molded part is exposed to attack by alkalies.

2. The use of a molded part according to Claim 1, wherein a sol is used as the liquid material.

3. The use of a molded part according to Claim 2, with the provision that the sol has an average particle size (d₅₀) < 250 nm.

4. The use of a molded part according to Claim 2 with the provision that the sol has an average particle size (d₅₀) < 50 nm.

5. The use of a molded part according to Claim 2 with the provision that at least one sol is a silica sol, an alumina sol or a mixture of an alumina sol and a silica sol.

6. The use of a molded part according to Claim 2 with the provision that at least one sol in combination with a substance having an equivalent effect and/or a salt melt fills up the open pore volume at least in part.

7. The use of a molded part according to Claim 1 with the provision that at least 50 vol% of the open pore volume of the molded part after firing is filled with the liquid material.

8. The use of a molded part according to Claim 1 with the provision that at least 80 vol% of the open pore volume of the molded part after firing is filled with the liquid material.

9. The use of a molded part according to Claim 1 such that its refractory oxide content is increased by an absolute 1 to 7 mass% by the material introduced into the open pore volume after firing the molded part.

10. The use of a molded part according to Claim 1 as a lining material in furnaces in which the molded part is exposed to a gas atmosphere containing alkalies.

11. The use of a molded part according to Claim 1 as a lining material in a cement rotary kiln installation.

12. The use of a molded part according to Claim 1, its SiO₂ amounting to < 60 wt%, not including any SiO₂ content of the material distributed in the pore volume.

## Revendications

1. Utilisation d'un corps moulé céramique cuit réfractaire, dont l'espace poreux ouvert est, après la cuisson, au moins partiellement rempli d'un matériau liquide, qui entraîne, sous l'influence de la température, le dégagement dans l'espace poreux d'au moins un oxyde réfractaire faisant office de matériau de revêtement dans des fours où la pièce moulée est exposée à l'attaque des alcalis.

2. Utilisation d' une pièce moulée selon la revendication 1, pour laquelle le matériau liquide utilisé est un sol.

3. Utilisation d'une pièce moulée selon la revendication 2 **caractérisée en ce que** le sol présente une dimension moyenne des particules de (dₛₒ) < 250 nm.

4. Utilisation d'une pièce moulée selon la revendication 2 **caractérisée en ce que** le sol présente une dimension moyenne des particules de (dₛₒ) < 50 nm.

5. Utilisation d' une pièce moulée selon la revendication 2 **caractérisée en ce que** l'au moins un sol est un sol de silice, un sol d'alumine ou un mélange d'un sol de silice et d' un sol d'alumine.

6. Utilisation d'une pièce moulée selon la revendication 2 **caractérisée en ce que** l'au moins un sol associé à une suspension aux effets similaires et/ou du sel fondu remplit au moins partiellement l'espace poreux ouvert.

7. Utilisation d' une pièce moulée selon la revendication 1 **caractérisée en ce que** l'espace poreux ouvert de la pièce moulée est rempli, après la cuisson, à au moins 50 % vol. de matériau liquide.

8. Utilisation d'une pièce moulée selon la revendication 1 **caractérisée en ce que** l'espace poreux ouvert de la pièce moulée est rempli, après la cuisson, à au moins 80 % vol. de matériau liquide.

9. Utilisation d'une pièce moulée selon la revendication 1 dont la teneur en oxydes réfractaires est augmentée, par le matériau introduit dans l'espace poreux ouvert, après la cuisson de la pièce moulée, de 1 à 7 % du poids en valeur absolue.

10. Utilisation d'une pièce moulée selon la revendication 1 en tant que matériau de revêtement dans des fours dans lesquels la pièce moulée est exposée à une atmosphère gazeuse contenant des alcalis.

11. Utilisation d'une pièce moulée selon la revendication 1 en tant que matériau de revêtement dans un f our à ciment rotatif.

12. Utilisation d'une pièce moulée selon la revendication 1 dont la teneur en SiO₂, sans la teneur en SiO₂ du matériau réparti dans l'espace poreux, est < 60 % du poi ds.
